# EUROPÄISCHE PATENTSCHRIFT

(11) **EP 1 293 453 B1**
(45) Veröffentlichungstag und Bekanntmachung des Hinweises auf die Patenterteilung: **05.07.2006**
(21) Anmeldenummer: 02010695.1
(22) Anmeldetag: 14.05.2002
(51) Int. Cl.: B65G 47/08

(54) **Vorrichtung zur Herstellung palettierfähiger Lagen**
Apparatus for making palletizable layers
Dispositif pour la fabrication de couches palettisables

(30) Priorität: 14.09.2001 DE 10145542
(43) Veröffentlichungstag der Anmeldung: 19.03.2003
(73) Patentinhaber: KHS AG, 44143 Dortmund (DE)
(72) Erfinder: Purper, Gunther, 55593 Rüdesheim (DE); Baumann, Michael, 83607 Holzkirchen (DE)

(56) Entgegenhaltungen:
- WO-A-01/51390
- US-A- 4 449 624
- US-A- 5 195 627
- US-A- 5 320 478
- US-A- 5 383 760
- US-A- 6 126 383

## Beschreibung

Die Erfindung betrifft eine Vorrichtung zur Herstellung palettierfähiger Lagen von zu Gebinden zusammengefaßten Produkten wie Flaschen, Dosen und dergleichen, bestehend aus einer Zuführeinrichtung, einer dieser nachgeordneten Verteil- und Ausrichtstation zur lagenspezifischen Ausrichtung der Gebinde und einer der Verteil- und Ausrichtstation nachgeordneten Sammelstation.

Derartige Verkaufsverpackungen bestehen beispielsweise aus in ein, zwei oder mehr Reihen nebeneinander angeordneten Behältern, wobei in jedem Gebinde vier, sechs, acht, oder mehr Behälter zusammengefaßt sind. Diese Gebinde sind in Folie eingeschlagen und eingeschrumpft oder aber in Kartons verpackt. Solche Gebinde sollen ohne zusätzliche Versandverpackungen palettiert werden. Hierzu ist es erforderlich, die einzelnen Gebinde vor dem eigentlichen Palettieren der Palettierstation in der vorgesehenen Anordnung zuzuführen. Das geschieht unter anderem dadurch, daß vorab mehrere Verkaufsverpackungen zu größeren Gebinden auf einem Tray und/oder nur in Folie zusammengefaßt werden, wonach dann diese zusammengefaßten Gebinde der Palettierstation zugeführt werden. Das hat seinen Grund darin, daß die bisher benutzten Verteil- und Ausrichtsysteme recht langsam arbeiten, da sie rein mechanisch gesteuert werden. Zum Ausrichten der Gebinde stehen fest eingestellte diskrete Transportlinien zur Verfügung, auf denen die Gebinde ausgerichtet und zur Palettierstation transportiert werden. Bei einem Wechsel von einer Gebindegröße auf eine andere müssen konstruktive Maßnahmen getroffen werden, um die Transportlinien auf die neue Größe umzustellen.

Um die Palettierfläche optimal ausnutzen zu können, ist es mitunter erforderlich, daß die Einzelgebinde nicht allein in einer Richtung orientiert sind, sondern eine um 90°C gedrehte Orientierung aufweisen. Nur so ist es bei bestimmten Packungsgrößen und -formen möglich, die Palettierfläche ohne unnötige Lücken zwischen den Gebinden auszunutzen.

Von einer modernen Palletiervorrichtung sind zumindest die nachfolgend dargestellten Prozessschritte auszuführen, wobei deren Reihenfolge zum Teil verändert werden kann und die einzelnen Prozessschritte möglichst schnell und automatisch ausgeführt werden sollen.

Zunächst sollen die angeförderten Gebinde seitlich ausgerichtet und, falls erforderlich, beispielsweise um 90° gedreht werden. Abschließend folgt eine Verdichtung der Gebinde, um eine lückenfreie, palettierfähige Lage von Gebinden zu bilden.

Zur Realisierung eines derartigen Gesamtablaufes wurde z.B. im Rahmen der US 5,320,478 eine Palletiervorrichtung vorgestellt.

Bei dieser Vorrichtung erfolgt die Verdichtung der Gebinde durch das Zusammenwirken einer Stopperschiene (stop bar) und zweier Seitenschieber (side pusher), wobei zu beachten ist, dass die Verdichtungsvorrichtung ausschließlich reihenweise arbeitet, und zu einem Zeitpunkt immer nur eine Reihe von Gebinden verdichten kann.

Dabei werden die zuvor gedrehten Gebinde durch die Stopperschiene so lange aufgehalten, bis alle Gebinde einer Reihe an der Stopperschiene anliegen. Ist dieses der Fall, so werden die Gebinde durch die Seitenschieber auf das gewünschte Breitenmaß verdichtet. Anschließend wird die Stopperschiene vertikal nach oben bewegt, wodurch der Transportweg für die so gebildete Reihe von Gebinden frei gegeben wird.
Nachteilig an einer derartigen Vorrichtung ist, dass bedingt durch die reihenorientierte und nicht kontinuierliche Arbeitsweise der Verdichtungsstation nur eine vergleichsweise geringe Anlagenleistung erreicht werden kann.

Der Erfindung liegt daher die Aufgabe zugrunde, eine Vorrichtung der eingangs genannten Art so auszugestalten, daß die Geschwindigkeit des Verteil- und Ausrichtvorgangs erhöht wird, der Zwischenschritt der Zusammenfassung von Einzelgebin-Gebinden entfallen kann und die Umstellung von einer Packungsgröße zur anderen schnell und auf einfache Weise erfolgen kann.

Die Erfindung löst diese Aufgabe gemäß dem kennzeichnenden Teil des Anspruchs 1.

Mit Hilfe dieser Vorrichtung ist es möglich, Einzelgebinde in kontinuierlicher Folge zu einer kompletten Lage zusammenzustellen. In der der Drehstation nachgeschalteten Sammelstation werden dann die ausgerichteten Einzelgebinde im gewünschten Palettiermuster zusammengefasst. Von hier wird die so zusammengestellte palettierfähige Lage mittels bekannter Einrichtungen auf Paletten gesetzt.

In eigenständiger Ausbildung ist gemäß Anspruch 3 vorgesehen, dass die seitliche Auslaufposition der Gebinde im Endbereich der Verteil- und Ausrichtstation in Bezug auf eine mittige Position der jeweiligen Drehstation einstellbar ist.

Auf diese Weise ist sichergestellt, dass die Anlage auf einfache Art, beispielsweise durch Synchronantriebe oder dergl., leicht auf unterschiedliche Gebindearten umgestellt werden kann. Komplizierte manuelle Verstellungen entfallen. Es ist vorgesehen, die unterschiedlichen Einstellungen speicher- und abrufbar auszuführen. Auf diese Weise können durch Eingabe der Gebindeart alle erforderlichen Einstellungen an der gesamten Vorrichtung vorgenommen werden.

Die Erfindung wird im folgenden anhand von Zeichnungen dargestellt und näher erläutert.

Es zeigen:
- Fig. 1: in Draufsicht und systematischer Darstellung eine Verteil- und Ausrichtvorrichtung und
- Fig. 2: in Draufsicht eine Kurvenführung für die Tragplatten der einzelnen Gebinde.

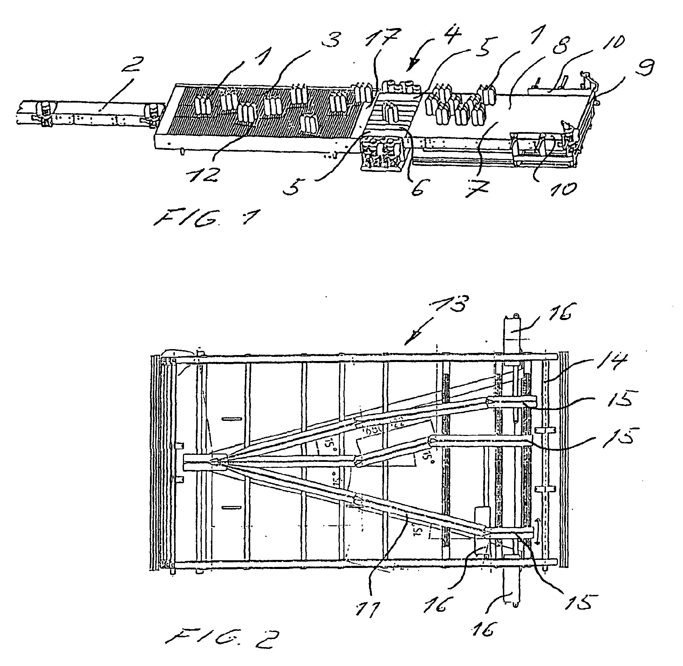

Gemäß dem in Fig. 1 dargestellten Ausführungsbeispiel besteht die Vorrichtung zur Herstellung palettierfähiger Lagen von Gebinden 1 aus einer als Transporteur ausgebildeten Zuführeinrichtung 2, auf der die Gebinde 1 ein- oder mehrspurig zugeleitet werden können. Im Anschluß an die Zuführeinrichtung 2 befindet sich die eigentliche Verteil- und Ausrichtstation 3, auf der die Gebinde 1 seitlich versetzt zueinander ausgerichtet werden, wobei die seitliche Ausrichtung derart erfolgt, daß die Gebinde 1 jeweils mittig einer nachfolgenden Liniear-Dreh- und Ausrichtstation 4 zugeführt werden. Diese besteht beispielsweise aus jeweils mindestens zwei nebeneinander befindlichen Transportbändern 5, 6, die mit unterschiedlichen Geschwindigkeiten angetrieben werden können und auf diese Art und Weise eine Drehung der jeweils zugeführten Gebinde verursacht. Die einzelnen Bänder 5, 6 sind wie ausgeführt, mit gleichen oder unterschiedlichen Geschwindigkeiten antreibbar, so daß die Gebinde, sofern für das jeweils vorgegebene Lagenbild gewünscht, geradeaus durch die LinearDreh- und Ausrichtstation 4 geleitet werden können. Bei einer erforderlichen Drehung der einlaufenden Gebinde 1 werden in die nebeneinander befindlichen Linearbänder 5, 6 mit jeweils unterschiedlichen Geschwindigkeiten angetrieben, so daß eine unverzügliche und relativ schnelle Drehung auf einem äußerst kurzen Transportabschnitt durchgeführt werden kann. Die so je nach dem gewünschten Lagebild erstellten bzw. ausgerichteten Gebinde 1 gelangen dann zu der eigentlichen Sammelstation 7, deren Transportebene 8 die Gebinde 1 in Form und Anzahl für die zu bildende Stückgutlage aufnimmt. Sobald das letzte Gebinde zur Vervollständigung dieser kompletten Lage auf der Transportebene 8 der Sammelstation angelangt ist, wird diese kurzfristig beschleunigt, um zu den nachfolgenden Gebinden einer weiteren Lage einen gewissen Abstand zu bilden, der ausreicht, um eine mitverfahrbare Zentriervorrichtung 9 hinter die Lage zu bringen. Mittels dieser mitfahrbaren Zentriervorrichtung 9 wird die Lage mindestens dreiseitig zentriert. Die Zentrierbleche oder Zentrierleisten 10 können vorzugsweise pneumatisch in die Ebene der Sammelstation 7 hineinbewegt werden. Im Anschluß darauf wird die komplette Lage zur Palettierung umgesetzt.

Figur 2 zeigt in Draufsicht eine Kurvenführung 11 für die Tragplatten 12 der einzelnen Gebinde 1, aufgenommen in einem Maschinengerüst 13 mit den einzelnen Antriebseinrichtungen 14. Es wurde bereits ausgeführt, daß die Auslaufposition der Gebinde 1 im Endbereich der Verteil- und Ausrichtstation 3 in Bezug auf eine mittige Position der jeweiligen zugeordneten Drehstation 4 erforderlich ist. Zu diesem Zwekke sind die Führungsbahnen bzw. -kurven 15 jeder Tragplatte 12 in ihrer Querposition, also quer zur eigentlichen Förderrichtung der Gebinde 1 einstellbar und verstellbar ausgeführt. Hierzu sind Stellmotoren 16 vorgesehen, die eine Verschiebung des Endbereiches der Führungskurven 15 je nach der gefahrenen Gebindeart oder deren Größe automatisch vollziehen können. Damit ist dann gewährleistet, daß die auf den Tragplatten 12 befindlichen Gebinde 1 jeweils exakt zur zugeordneten nachfolgenden Drehstation bzw. deren Linearbändern ausgerichtet sind. Um die jeweiligen Gebinde, die zu einer Lage erforderlich sind, nach Vervollständigung einer Lager abstandsmäßig kurzfristig zu trennen, kann zwischen der Verteil- und Ausrichtstation 3 zusätzlich eine Verzögerungseinrichtung 17 angeordnet sein. Andererseits ist es ferner möglich, die auf der Sammelstation 7 befindliche Lage bzw. die Transportebene 8 dieser Sammelstation 7 nach Übernahme des letztes Gebindes einer Lage kurzfristig zu beschleunigen, wodurch ebenfalls der erforderliche bzw. gewünschte Abstand von Lage zu Lage gewährleistet ist. Die mitlaufenden Zentrierelemente 10 der Zentriervorrichtung 9 oberhalb der Anlagensammelstation richten die eingelaufene Gebindeformation zweckmäßig während der Fortbewegung kontinuierlich zu einer Lage aus.

## Patentansprüche

1. Vorrichtung zur Herstellung palettierfähiger Lagen von zu Gebinden (1) zusammengefassten Produkten wie Flaschen, Dosen und dergleichen, bestehend aus einer Zuführeinrichtung (2), einer dieser nachgeordneten Verteil- und Ausrichtstation (3) zur lagenspezifischen Ausrichtung der Gebinde und einer der Verteil- und Ausrichtstation nachgeordneten Sammelstation (7), wobei die zulaufenden Gebinde (1) zunächst seitlich ausgerichtet und in dieser Position einer Drehstation (4) zugeleitet werden, in welcher je nach vorgesehenem Lagebild eine Drehung oder ein Geradeauslauf eingeleitet und die Gebinde (1) dem Lagenvorbereitungstisch der Sammelstation (7) zugeführt werden, ***dadurch gekennzeichnet, dass*** die auf dem Lagenvorbereitungstisch der Sammelstation (7) befindlichen Gebinde (1) von mit den Gebinden (1) mitlaufenden Zentrierelementen (10) zu einer Lage zusammengefügt werden.

2. Vorrichtung nach Anspruch 1, ***dadurch gekennzeichnet, dass*** die Gebinde (1) mindestens einspurig der Verteil- und Ausrichtstation (3) zugeleitet und in dieser mittig zu Linearbändern (5,6) einer nachfolgenden Lineardreh- und Ausrichtstation (4) ausgerichtet zugeführt und in dieser entsprechend dem vorgegebenen Lagebild gedreht und/oder ein Geradeauslauf eingeleitet wird und der Sammelstation (7) zugeleitet werden, worauf nach Übernahme der in einer Lage gewünschten Gebinde (1) die Transportebene (8) der Sammelstation (7) mit den noch lose ungeordneten Gebinden kurzzeitig beschleunigt und darauf mittels der mitfahrbaren Zentrierelementen (10) zu einer Lage zentriert werden.

3. Vorrichtung nach Anspruch 1 oder 2, ***dadurch gekennzeichnet, dass*** die seitliche Auslaufposition der Gebinde (1) im Endbereich der Verteil- und Ausrichtstation (3) in Bezug auf eine mittige Position der jeweiligen zugeordneten Drehstation (4) einstellbar ist.

4. Vorrichtung nach den vorhergehenden Ansprüchen, ***dadurch gekennzeichnet, dass*** die seitliche Auslaufposition der Gebinde (1) durch seitliche Verstellung der Führungskurven (15) von Tragplatten (12) einstellbar ist.

5. Vorrichtung nach vorhergehenden Ansprüchen, ***dadurch gekennzeichnet, dass*** zwischen der Verteil- und Ausrichtstation (3) und der Drehstation (4) eine Verzögerungseinrichtung (17) angeordnet ist.

## Claims

1. Apparatus for the production of palletizable layers of products, such as bottles, cans and the like, that are combined to form groups (1), the said apparatus comprising a supplying device (2), a distributing and aligning station (3) that is connected downstream of the said supplying device and is for the layer-specific alignment of the groups and a collecting station (7) that is connected downstream of the said distributing and aligning station, wherein the incoming groups (1) are initially aligned in a lateral manner and are supplied in this position to a rotating station (4), where, depending on the layer pattern intended, they are rotated or allowed to run straight-ahead, and the groups (1) are supplied to the preliminary layering table of the collecting station (7), **characterised in that** the groups (1) that are situated on the preliminary layering table of the collecting station (7) are assembled together to form one layer by centring members (10) that are entrained with the groups (1).

2. Apparatus according to claim 1 **characterised in that** the groups (1) are conveyed at least in a one-track manner to the distributing and aligning station (3) and in the said station are supplied centrally in an aligned manner to linear belts (5, 6) of a subsequent linear rotating and aligning station (4) and in this station, corresponding to the predetermined layer pattern, are rotated and/or are run straight ahead and are supplied to the collecting station (7), whereupon, once the groups (1) that are required to be in one layer have been received, the conveying plane (8) of the collecting station (7) is accelerated for a brief period with the groups that are still loose and randomly distributed and they are then centred through the intermediary of the entrainable centring members (10) to form one layer.

3. Apparatus according to claim 1 or 2, **characterised in that** the lateral discharge position of the groups (1) in the end region of the distributing and aligning station (3) is adjustable with reference to a central position of the respective associated rotating station (4).

4. Apparatus according the preceding claims, **characterised in that** the lateral discharge position of the groups (1) is adjustable by means of lateral adjustment of the guide curves (15) of supporting plates (12).

5. Apparatus according to preceding claims, **characterised in that** a delaying device (17) is disposed between the distributing and aligning station (3) and the rotating station (4).

## Revendications

1. Dispositif pour la réalisation de couches palettisables de produits regroupés en lots (1), comme des bouteilles, des boîtes et analogues, constitué d'un dispositif d'alimentation (2), d'un poste de répartition et ajustement (3) placé après celui-ci afin d'ajuster les lots dans des positions données, et d'un poste de collecte (7) placé après le poste de répartition et ajustement, les lots (1) arrivants étant d'abord ajustés latéralement et transmis dans cette position à un poste de rotation (4), auquel, selon la disposition prévue, une rotation ou un transfert rectiligne est généré et les lots (1) sont transmis au plateau de préparation de position du poste de collecte (7), **caractérisé en ce que** les lots (1) présents sur le plateau de préparation de position du poste de collecte (7) sont réunis dans une position par des éléments de centrage (10) se déplaçant avec les lots (1).

2. Dispositif selon la revendication 1, **caractérisé en ce que** les lots (1) sont envoyés au poste de répartition et ajustement (3) sur au moins une voie et introduits dans celui-ci de manière centrée par rapport à des bandes linéaires (5, 6) d'un poste de rotation linéaire et d'ajustement (4) placé après et, dans celui-ci, tournés en fonction de la disposition prévue et/ou transmis en ligne droite et sont introduits au poste de collecte (7), après quoi, après prise en charge des lots (1) souhaités dans une position, le plan de transport (8) du poste de collecte (7) est brièvement accéléré avec les lots encore non rangés en vrac et ceux-ci sont centrés dans une position au moyen des éléments de centrage (10) pouvant être entraînés conjointement.

3. Dispositif selon la revendication 1 ou 2, **caractérisé en ce que** la position de sortie latérale des lots (1) dans la zone d'extrémité du poste de répartition et d'ajustement (3) est réglable par rapport à une position centrale du poste de rotation (4) respectif associé.

4. Dispositif selon l'une des revendications précédentes, **caractérisé en ce que** la position de sortie latérale des lots (1) peut être réglée par déplacement latéral des cames de guidage (15) de plateaux porteurs (12).

5. Dispositif selon l'une des revendications précédentes, **caractérisé en ce qu'**entre le poste de répartition et d'ajustement (3) et le poste de rotation (4) se trouve un dispositif de retardement (17).
